# EUROPÄISCHE PATENTSCHRIFT

(11) **EP 2 145 752 B1**
(45) Veröffentlichungstag und Bekanntmachung des Hinweises auf die Patenterteilung: **13.04.2011**
(21) Anmeldenummer: 09175516.5
(22) Anmeldetag: 08.08.2007
(51) Int. Cl.: B29D 29/10, B66B 7/06, F16G 5/06

(54) **Aufzugriemen für eine Aufzuganlage und Verfahren zur Herstellung eines solchen Aufzugriemens**
Lift belt for a lift system and method for manufacturing such a lift belt
Courroie d'élévateur pour un élévateur et procédé de fabrication d'une telle courroie d'élévateur

(30) Priorität: 11.08.2006 EP 06118824; 11.08.2006 EP 06118816; 11.08.2006 EP 06118817; 11.08.2006 EP 06118819; 22.12.2006 EP 06127121
(43) Veröffentlichungstag der Anmeldung: 20.01.2010
(62) Teilanmeldung aus: 07114041.2
(73) Patentinhaber: Inventio AG, 6052 Hergiswil NW (CH)
(72) Erfinder: Ach, Ernst, 6030, Ebikon (CH)

(56) Entgegenhaltungen:
- EP-A- 1 477 449
- EP-A1- 1 555 234
- EP-A2- 1 547 960
- WO-A2-03/008840
- DE-A1- 3 527 640
- DE-A1- 19 851 761
- US-A- 3 615 988
- US-A- 4 078 443
- US-A- 5 741 197

## Beschreibung

Die vorliegende Erfindung betrifft eine Aufzugsanlage mit einem Aufzugriemen, einen Aufzugriemen für eine solche Aufzuganlage sowie ein Verfahren zur Herstellung eines solchen Aufzugriemens.

Eine Aufzugsanlage umfasst eine Aufzugskabine und in der Regel ein Gegengewicht, die in einem Aufzugsschacht oder entlang freistehender Führungseinrichtungen bewegbar sind. Zum Erzeugen der Bewegung weist die Aufzugsanlage mindestens einen Antrieb mit mindestens je einem Treibrad auf, das über einen oder mehrere Aufzugriemen die Aufzugkabine und das Gegengewicht trägt und/oder die erforderlichen Antriebskräfte auf diese überträgt. Ein Treibrad kann dabei in an sich bekannter Weise als Treibscheibe oder gleichermaßen als Rad mit kleinerem Durchmesser, insbesondere auch als eine Abtriebswelle des Antriebs selbst, ausgebildet sein.

Die Aufzugkabine und das Gegengewicht können über denselben mindestens einen Trag- und Antriebsriemen getragen und angetrieben sein, der über das mindestens eine Treibrad geführt ist. Alternativ können die Aufzugkabine und das Gegengewicht auch über mindestens einen über eine Umlenkrolle laufenden Tragriemen miteinander gekoppelt sein, so dass sich das Gegengewicht hebt, wenn die Aufzugkabine abgesenkt wird und umgekehrt, wobei der Antrieb der Aufzugskabine und des Gegengewichts durch eine Antriebseinheit über mindestens einen separaten Antriebsriemen erfolgt. Während bei Antriebsriemen durch Treibräder Zugkräfte auf diese Riemen übertragen werden, um die Aufzugkabine bzw. das Gegengewicht zu bewegen, werden reine Tragriemen nicht über Treibräder, sondern lediglich über Umlenkelemente, insbesondere drehbare oder feste Umlenkrollen umgelenkt und nehmen die Gewichtskraft der Aufzugkabine bzw. des Gegengewichts auf. Bei den meisten Aufzugsanlagen werden die Trag- und die Antriebsfunktion durch denselben mindestens einen Trag- und Antriebsriemen erfüllt.

Ein Aufzugriemen nach der vorliegenden Erfindung kann für jede der oben beschriebenen Funktionen eingesetzt werden, also gleichermaßen als Tragriemen, als Antriebsriemen oder als Trag- und Antriebsriemen sowie als einer von mehreren parallel angeordneten Riemen oder als Einzelriemen.

Wo zwischen Treibrädern und Umlenkrollen keine Unterscheidung erforderlich ist, werden diese im Folgenden allgemein als Riemenräder bezeichnet.

Aus der EP 1 555 234 B1 ist ein Aufzugriemen nach dem Oberbegriff des Anspruchs 1 mit mehreren, sich in Längsrichtung des Aufzugriemens erstreckenden Keilrippen bekannt, die eine Kontaktseite zum Eingriff mit einem Treibrad der Aufzuganlage bilden, wobei in jeder Keilrippe zwei Zugträgern angeordnet sind. Eine den Keilrippen gegenüberliegende Seite kann mit einer zusätzlichen Rückenschicht versehen sein.

Der die Keilrippen bildende und die Zugträger aufnehmende Riemenkörper ist gemäß EP 1 555 234 B1 aus einem Elastomer hergestellt und überträgt die Trag- und Antriebskräfte von den Riemenrädern auf die Zugträger. Unter den dabei auftretenden teilweise hohen Flächenpressungen deformieren sich die elastomeren Keilrippen. Diese wechselnden Deformationen reduzieren nachteilig die Lebensdauer des Aufzugriemens. Zudem können sie den Reibschluss zwischen dem Riemenkörper und den darin aufgenommenen Zugträgern und damit die Kraftübertragung in die Zugträger beeinträchtigen. Ebenso kann eine Verformung einer Keilrippe den Reibschluss dieser oder einer benachbarten Keilrippe mit der zugehörigen Keilrille im Treibrad verschlechtern.

Ein weiterer Antriebsriemen und ein Verfahren zu seiner Herstellung ist in der WO 03/008840 A2 offenbart.

Eine Aufgabe der vorliegenden Erfindung ist es daher, einen Aufzugriemen zur Verfügung zu stellen, bei dem eine geringere elastische Deformation der Keilrippen auftritt.

Zur Lösung dieser Aufgabe ist ein Aufzugriemen nach dem Oberbegriff des Anspruchs 1 durch dessen kennzeichnende Merkmale weitergebildet. Anspruch 10 stellt das zugehörige Herstellungsverfahren, Anspruch 11 eine Aufzuganlage mit einem solchen Aufzugriemen unter Schutz.

Ein erfindungsgemäßer Aufzugriemen für eine Aufzuganlage weist eine Keilrippenanordnung mit wenigstens zwei sich in Längsrichtung des Aufzugriemens erstreckenden Keilrippen auf, die eine Kontaktseite des Aufzugriemens zum Eingriff mit einem Treibrad der Aufzuganlage bilden. Bevorzugt weist die Keilrippenanordnung mehr als zwei Keilrippen auf, die zum Eingriff mit entsprechenden Keilrillen in dem Treibrad vorgesehen sind. Dadurch kann die vom Aufzugriemen zu übertragende Gesamtzugkraft auf mehrere Keilrippen verteilt werden, was die Ausbildung kleinerer und damit flexiblerer Keilrippen und so die Umlenkung um kleinere Riemenräder gestattet.

Der Aufzugriemen umfasst weiter eine Zugträgeranordnung mit wenigstens zwei Zugträgern, die sich in Längsrichtung des Aufzugriemens erstrecken und in zwei einander benachbarten Keilrippen der Keilrippenanordnung angeordnet sind. In einer bevorzugten Ausführung sind in jeder Keilrippe wenigstens ein, bevorzugt zwei oder mehr Zugträger angeordnet, so dass die zu übertragende Gesamtzugkraft auf viele Zugträger verteilt werden kann, die dementsprechend kleinere Durchmesser aufweisen können und so die Umlenkung um kleinere Riemenräder gestattet. Gleichermaßen können einzelne Keilrippen, die dann beispielsweise als Führungsrippen genutzt werden können, auch zugträgerlos ausgebildet sein. Die Zugträger der Zugträgeranordnung umfassen bevorzugt Litzen oder Seile aus ein- oder mehrfach verdrillten Drähten und/oder Kunststoffgarnen.

Erfindungsgemäß umfasst der Aufzugriemen eine die Rückseite des Aufzugriemens bildende Rückenschicht, die ein Profil mit wenigstens einem, bevorzugt mehreren Stegen aufweist, die zur Kontaktseite hin in die Keilrippenanordnung hervorragen und sich bevorzugt in Längsrichtung des Aufzugriemens erstreckten. Damit stützt sich die Keilrippenanordnung in Querrichtung des Riemens an den in sie hineinragenden Stegen formschlüssig ab, so dass sich die Keilrippen nicht mehr ungehindert in diese Richtung deformieren können. Diese Reduzierung der im Betrieb auftretenden Deformationen erhöht die Lebensdauer des Aufzugriemens.

Aufgrund der Abstützung der Keilrippenanordnung an dem Steg versteifen sich die Keilrippen wenigstens in einem unteren, von der Kontaktseite abgewandten Basisbereich. Vorteilhafterweise können dadurch auch höhere Flächenpressungen zwischen dem Treibrad und dem diesen umschlingenden Aufzugriemen realisiert werden, was den Reibschluss und damit die Treibfähigkeit verbessern kann.

Außerdem pflanzen sich lokal höhere Belastungen, die beispielsweise aufgrund von Fertigungs- oder Montagetoleranzen, Verschmutzung oder einem Defekt auf eine Keilrippe wirken, bei einem erfindungsgemäßen Aufzugriemen vorteilhafterweise nicht mehr ungehindert als Schub- bzw. Druckspannungen auf benachbarte Keilrippen fort. Hierdurch wird es möglich, benachbarte Keilrippen vor solch hohen Belastungen zu schützen, was die Ausfallsicherheit des gesamten Aufzugriemens erhöhen kann.

Ein weiterer Vorteil der vorliegenden Erfindung kann darin bestehen, dass sich die Kontaktfläche zwischen der Keilrippenanordnung und der Rückenschicht vergrößert, was deren Verbindung miteinander verbessert. Hierzu trägt auch der Formschluss bei, den eine mit einem oder mehreren Stegen ausgebildete Rückenschicht mit der Keilrippenanordnung aufweist. Insbesondere werden in Querrichtung auf die Keilrippenanordnung wirkende Kräfte teilweise formschlüssig über die Stege abgestützt, so dass in der Keilrippenanordnung auftretende Schubspannungen und damit verbundene Deformationen, insbesondere eine Scherung oder eine Querexpansion der Keilrippenanordnung reduziert werden können.

Vorteilhafterweise kann ein erfindungsgemäßer Aufzugriemen auf seinen beiden Seiten unterschiedliche Materialien aufweisen, die jeweils an die unterschiedlichen Erfordernisse angepasst sein können. So kann für die Rückenschicht ein Material gewählt werden, das eine stabile Abstützung der Keilrippen ermöglicht und im Übrigen eine ausreichende Flexibilität aufweist, damit die Rückenschicht als Teil des Aufzugriemens um ein Riemenrad umgelenkt werden kann. Für die Keilrippenanordnung kann ein Material gewählt werden, das besonders geeignet für die Übertragung der Zugkräfte von dem Treibrad auf die Zugträger ist. Insbesondere ist hier ein Material zu bevorzugen, das eine ausreichende Adhäsion gegenüber den eingebetteten Zugträgern aufbaut, eine gewünschte Traktionsfähigkeit beim Zusammenwirken mit einem Treibrad aufweist und gleichzeitig die bei der Kraftübertragung auftretenden Spannungen und Verformungen erträgt.

Bevorzugt ist die Rückenschicht daher aus einem thermoplastischen Kunststoff, insbesondere aus Polyamid (PA), Polyethylen (PE), Polyester, insbesondere Polyethylenterephthalat (PET) Polycarbonat (PC), Polypropylen (PP), Polybutylenterephthalat (PBT), Polyethersulfon (PES), Polytetrafluorethylen (PTFE), Polyvinylchlorid (PVC) oder Polyblend (Mischung aus zwei oder mehr verschiedenen Kunststoffen) und/oder einem Gewebe aus einem solchen thermoplastischem Kunststoff hergestellt. Das Gewebe kann in einem weiteren dieser thermoplastischen Kunststoffe eingebettet bzw. von diesem durchtränkt sein.

Eine solche Rückenschicht ist einerseits ausreichend steif, um die Keilrippenanordnung abzustützen. Zugleich kann sie eine abriebfeste und reibungsarme Rückseite des Aufzugriemens bilden, was insbesondere von Vorteil ist, wenn dieser mit seiner Rückseite Umlenkräder umschlingt. Besonders bevorzugt weist die Rückseite des Aufzugriemens daher mit einem Umlenkrad einen Reibwert von höchstens 0,35, bevorzugt höchstens 0,3 und besonders bevorzugt höchstens 0,25 auf. Hierzu kann die Rückenschicht zusätzlich auf ihrer der Kontaktseite abgewandten Rückseite eine abriebfeste und/oder reibungsarme Beschichtung aufweisen, was die Lebensdauer bzw. den Wirkungsrad eines erfindungsgemäßen Aufzugriemens erhöht.

Die Keilrippen sind bevorzugt aus einem Elastomer, insbesondere Polyurethan (PU), Polychloropren (CR) oder Ethylen-Propylen-Dien-Kautschuk (EPDM) hergestellt. Ein solches Elastomer gestattet zum einen hohe Flächenpressungen und eine gute Verbindung zu den in ihm angeordneten Zugträgern. Zum anderen kann er durch die erfindungsgemäß in die Keilrippenanordnung hineinragenden Stege ausreichend versteift werden, so dass er sich nicht unzulässig, insbesondere in Querrichtung des Aufzugriemens, deformiert.

Keilrippen aus einem solchen Elastomer weisen vorteilhafterweise einen guten Reibschluss mit dem Treibrad auf. Hierzu können sie auf der Kontaktseite eine Beschichtung aufweisen, die den Reibwert und damit die Treibfähigkeit noch erhöht. Gleichermaßen kann die Beschichtung auch einen geringeren Reibwert aufweisen, falls durch die Keilwirkung der Keilrippen bereits eine ausreichend hohe Treibfähigkeit gewährleistet ist. Hierdurch kann ein Verklemmen der Keilrippen in den Keilrillen des Treibrades vermieden werden. Eine solche reibungsmindernde Beschichtung kann zudem die Abriebfestigkeit und damit die Lebensdauer des Aufzugriemens erhöhen. Bevorzugt beträgt der Reibwert zwischen Keilrippen und Treibrad höchstens 0,35, bevorzugt höchstens 0,3 und besonders bevorzugt höchstens 0,25.

Zwischen der Keilrippenanordnung und der Rückenschicht können eine oder mehrere Zwischenschichten angeordnet sein. Eine solche Zwischenschicht kann beispielsweise die Verbindung zwischen Keilrippenanordnung und Rückenschicht verbessern. Zusätzlich oder alternativ kann eine Zwischenschicht den Aufzugriemen in seiner Längs- und/oder Querrichtung versteifen oder Schwingungen des Aufzugriemens dämpfen. Zu diesen Zwecken kann eine Zwischenschicht insbesondere ein Gewebe umfassen.

Ein Steg ist vorteilhafterweise zwischen zwei einander benachbarten Keilrippen der Keilrippenanordnung angeordnet. Hierdurch wird einerseits der Kraftfluss zwischen der Keilrippe und den darin angeordneten Zugträgern nicht gestört. Andererseits werden so die benachbarten Keilrippen wenigstens teilweise voneinander entkoppelt, so dass höhere Lasten, die auf eine der beiden Keilrippen wirken, sich nicht ungehindert als Schub- und/oder Druckspannungen in die andere Keilrippe fortsetzen. Damit können insbesondere auch die Nachteile einer unterschiedlichen Lastverteilung auf die einzelnen Keilrippen kompensiert werden. So können beispielsweise über Keilrippen, die mehr Zugträger enthalten, größere Zugkräfte übertragen werden, ohne dass sich diese höheren Belastungen auf benachbarte Keilrippen mit weniger Zugträgern übertragen. Insbesondere können so reine Führungsrippen ohne Zugträger entlastet werden.

Umfasst die Keilrippenanordnung mehr als zwei Keilrippen, so sind bevorzugt zwischen allen benachbarten Keilrippen Stege der Rückenschicht ausgebildet, was die Deformation der einzelnen Keilrippen reduziert. Zusätzlich oder alternativ können auch auf der Riemenaußenseite neben den äußersten Keilrippen Stege der Rückenschicht ausgebildet sein. Diese stützen die gesamte Keilrippenanordnung in Riemenquerrichtung.

Ein weiterer Vorteil eines erfindungsgemäße Aufzugriemens, bei dem Stege zwischen benachbarten Keilrippen in die Keilrippenanordnung hineinragen, liegt darin, dass die Zugträger beim Herstellvorgang durch die Stege automatisch lagerichtig positioniert werden können. So können die Zugträger bei der Herstellung in die Zwischenräume zwischen benachbarten Stegen der Rückenschicht eingelegt und anschließend von dem Keilrippenmaterial umschlossen werden, ohne dass sie in Bereiche benachbarter Keilrippen oder in Bereiche der zwischen den Keilrippen ausgebildeten Keilrillengründe abwandern können. Daher können neben verwindungsarmen Zugträgern auch Zugträger verwendet werden, die sich beispielsweise aufgrund der Verseilung in Querrichtung des Riemens verdrillen wollen.

Besonders bevorzugt sind die Stege an oder in der Nähe der tiefsten Stelle eines zwischen benachbarten Keilrippen liegenden Keilrillengrundes angeordnet. Damit kann verhindert werden, dass Zugträger sich beim Herstellvorgang in einem Bereich der Keilrippenanordnung mit geringer Wandstärke platzieren, wo die bei der Übertragung der Kräfte vom Zugträger auf die Riemenräder auftretenden Materialspannungen zu einem Versagen des Keilrippenmaterials führen könnten. Die Stege bewirken ausserdem die Einhaltung eines Mindestabstands zwischen benachbarten Zugträgern benachbarter Keilrippen. Um die genannten Funktionen zu gewährleisten, ist es vorteilhaft, wenn die Stege eine gewisse Mindesthöhe aufweisen, um während des Herstellvorganges ein Abwandern der Zugträger in benachbarte Keilrippen zu verhindern. Eine solche Mindesthöhe kann beispielsweise wenigstens 25%, bevorzugt wenigstens 50% und besonders bevorzugt wenigstens 75% der Höhe der Zugträger betragen.

Besonders bevorzugt sind Stege, die einen dreieck- oder rechteckförmigen Querschnitt aufweisen. Rückenschichten mit solchen Stegquerschnitten sind besonders einfach herzustellen, beispielsweise durch Extrusion. Rechteckige Stegquerschnitte haben den Vorteil, dass sie die Zugträger während des Herstellvorganges des Aufzugriemens besonders gut führen, und dass sie im Aufzugsbetrieb auftretende Querkräfte in der Keilrippenanordnung besonders gut aufnehmen.

Zwei einander benachbarte Keilrippen der Keilrippenanordnung können einstückig miteinander verbunden sein, wobei sie einen zwischen ihnen in die Keilrippenanordnung hineinragenden Steg der Rückenschicht übergreifen. Die Keilrippenanordnung bildet so eine durchgängige Kontaktseite, und es wird eine Vergrösserung der Kontaktfläche zwischen Steg und Keilrippenanordnung und damit eine gute Verbindung zwischen der Keilrippenanordnung und der Rückenschicht erreicht. Durch das Verhältnis von Steghöhe zur Höhe der benachbarten Keilrippen kann die Weiterleitung von Spannungen innerhalb der Keilrippenanordnung sowie die in einer Keilrippe auftretende Deformation beeinflusst werden, um eine gleichmässige Belastung des Aufzugriemens zu bewirken.

Alternativ können zwei einander benachbarte Keilrippen der Keilrippenanordnung auch durch eine durchgehende Nut vollständig voneinander getrennt sein, in die der Steg hineinragt. Dies ermöglicht die weitestgehende Kraft- und Deformationsentkoppelung dieser beiden Keilrippen. Insbesondere wird damit auch erreicht, dass die Keilrippen aus unterschiedlichem Material hergestellt werden können. Beide Ausführungsformen können auch miteinander kombiniert sein, wobei eine Keilrippe von ihrer auf der einen Seite benachbarten Keilrippe durch eine durchgehende Nut vollständig getrennt und mit ihrer auf der anderen Seite benachbarten Keilrippe einstückig verbunden ist.

Bei der Herstellung eines Aufzugriemens nach der vorliegenden Erfindung kann die Keilrippenanordnung mit der Rückenschicht mittels kontinuierlicher Extrusion verbunden werden, wobei auch die Zugträger kontinuierlich in die Keilrippenanordnung eingebettet werden. Um die Festigkeit der Verbindung zwischen der Keilrippenanordnung und der Rückenschicht zu optimieren, kann die Rückenschicht vorher mit einem Haftvermittler behandelt, beispielsweise einem thermisch aktivierbaren Klebstoff beschichtet sein. Das Extrudieren des Aufzugriemens bildet einen besonders rationellen Herstellungsprozess, wobei sich die Keilrippenanordnung und die Rückenschicht fest und dauerhaft verbinden. Die Rückenschicht mit ihren Stegen kann dabei als Teil einer Form zum Urformen der Keilrippen dienen.

Die Keilrippen weisen bevorzugt einen Flankenwinkel von 60° bis 120° auf, wobei der Bereich von 80° bis 100° zu bevorzugen ist. Als Flankenwinkel ist der zwischen beiden Seitenflächen (Flanken) einer Keilrippe vorhandene Winkel bezeichnet. Dieser Bereich hat sich als idealer Bereich herausgestellt, bei welchem einerseits das Verklemmen der Keilrippen in den Keilrillen des Treibrads und damit Querschwingungen im Aufzugriemen vermieden werden und andererseits eine sichere Führung des Aufzugriemens auf den mit Keilrillen versehenen Riemenrädern gewährleistet ist.

Vorteilhafterweise kann auch die Rückenschicht auf ihrer Rückseite eine oder mehrere Keilrippen aufweisen. Damit wird auf vorteilhafte Weise erreicht, dass der Aufzugriemen auch beim Umlaufen von Riemenrädern geführt wird, auf denen er mit seiner Rückseite aufliegt. Die Anzahl der Keilrippen auf der Rückenschicht muss dabei nicht mit der Anzahl der Keilrippen der Keilrippenanordnung übereinstimmen.

Weitere Aufgaben, Merkmale und Vorteile ergeben sich aus den Unteransprüchen und den nachfolgend beschriebenen Ausführungsbeispiele. Hierzu zeigt:
- Fig. 1: einen Querschnitt durch einen Aufzugriemen nach einer ersten Ausführungsform der vorliegenden Erfin- dung;
- Fig. 2: einen Querschnitt durch einen Aufzugriemen nach einer zweiten Ausführungsform der vorliegenden Er- findung; und
- Fig. 3: einen zu einer Aufzugskabinenfront parallelen Schnitt durch eine Aufzugsanlage mit einem Aufzug- riemen nach einer Ausführung der vorliegenden Erfin- dung.

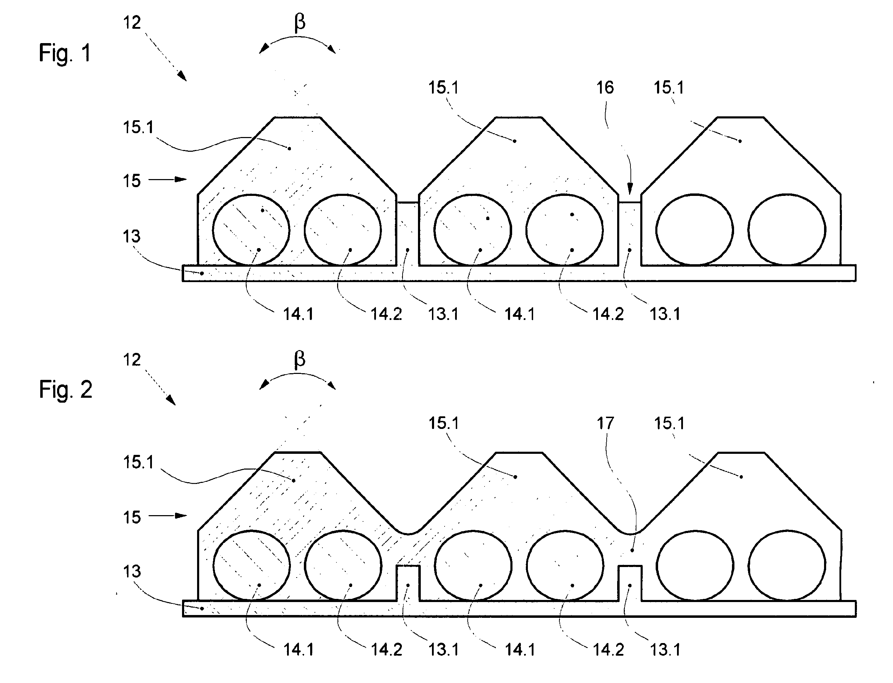

Fig. 1 zeigt einen Aufzugriemen 12 nach einer ersten Ausführung der vorliegenden Erfindung. Dieser umfasst eine Keilrippenanordnung 15 mit einzelnen Keilrippen 15.1 aus Polyurethan und eine damit verbundene Rückenschicht 13 aus Polyamid.

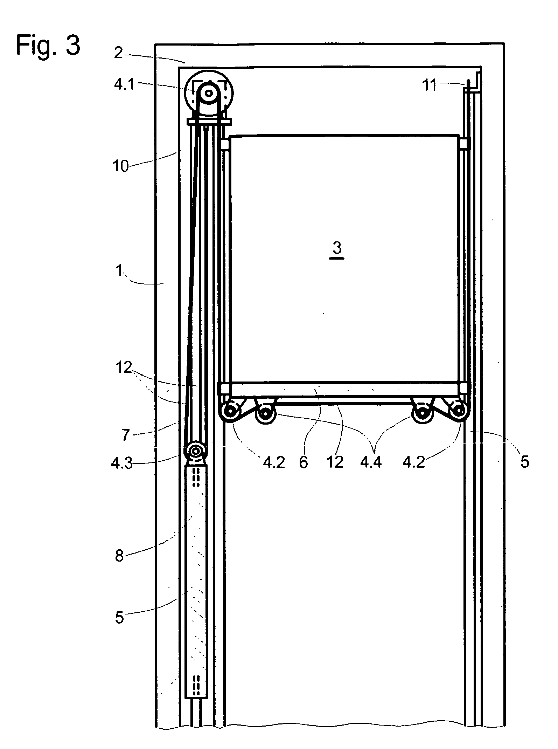

Die Keilrippen 15.1 der Keilrippenanordnung 15 weisen einen Flankenwinkel β von 120° auf und bilden eine Kontaktseite (in Fig. 1 oben) des Aufzugriemens 12 zum Eingriff mit einem Treibrad 4.1 oder einem Umlenkrad 4.2, 4.3 (s. Fig. 3). Sofern ein anderer Reibwert als der durch das Polyurethan der Keilrippen 15.1 gegebene erwünscht ist, kann der Aufzugriemen auf seiner Kontaktseite eine Beschichtung (nicht dargestellt) aufweisen. Beispielsweise können die in Kontakt mit einem mindestens teilweise komplementären Keilrillenprofil des Treibrades 4.1 kommenden Flanken der Keilrippen 15.1 mit einer dünnen Polyamidfolie beschichtet sein. Zur Vereinfachung der Herstellung kann gleichermaßen auch die gesamte Kontaktseite mit einer solchen Folie beschichtet sein.

In jeder Keilrippe 15.1 sind in ihrer der Rückenschicht 13 zugewandten Basis zwei Zugträger 14 parallel zueinander angeordnet. Die Zugträger 14 sind in nicht näher dargestellter Weise als Drahtseilen aus mehreren Drahtlitzen ausgebildet, die ihrerseits aus einzelnen, miteinander um eine Kunststoffseele verdrillten Einzeldrähten aus Stahl aufgebaut sind.

Die Rückenschicht 13 weist rechteckige Stege 13.1 auf, die aus der Rückenschicht des Aufzugriemens 12 (in Fig. 1 unten) in Richtung auf seine Kontaktseite herausragen. Zwischen je zwei benachbarten einzelnen Keilrippen 15.1, die durch eine durchgehende Nut 16 in Längsrichtung des Aufzugriemens voneinander getrennt sind, ist jeweils ein Steg 13.1 derart angeordnet, dass er in die Nut 16 hineinragt und sich im Wesentlichen bis zur Höhe der Zugträger 14 erstreckt. Die Stege 13.1 bzw. die Nuten 16 sind jeweils im Bereich der tiefsten Stelle eines Keilrillengrundes zwischen benachbarten Keilrippen 15.1 angeordnet.

Kommt die Keilrippenanordnung 15 in Eingriff mit dem im Wesentlichen komplementären Keilrillenprofil des Treibrades 4.1, so wirkt auf sie eine Flächenlast, die die einzelnen Keilrippen 15.1 deformiert. Eine durch die Flächenlast verursachte Stauchung der einzelnen Keilrippen 15.1 in Richtung auf die Rückseite des Aufzugriemens 12 hin bewirkt eine Tendenz der Keilrippen, in Riemenquerrichtung (Links-Rechts in Fig. 1) zu expandieren. Auch Scherbelastungen, die beispielsweise durch einen Versatz zwischen nicht fluchtenden Treib- und Umlenkrädern 4.1, 4.2, 4.3 (s. Fig. 3), durch eine Verdrillung des Aufzugriemens 12 um seine Längsachse zwischen Riemenrädern oder durch von den Rippenabständen der Keilrippenanordnung 15 abweichende Rippenabstände eines Riemenrads 4.1, 4.2, 4.3 induziert werden können, bewirken eine Tendenz der einzelnen Keilrippen 15.1, sich in Riemenquerrichtung zu verformen.

Solchen Verformungen wirken die Stege 13.1 der Rückenschicht 13 entgegen, an denen sich die einzelnen Keilrippen 15.1 in ihrem Basisbereich abstützen. Die Rückenschicht 13 wie auch die Stege 13.1 bestehen aus einem Material (bspw. Polyamid), das eine höhere Steifigkeit als das elastomere Material (bspw. Polyurethan) der Keilrippenanordnung 15 aufweist. Durch die Vorgabe der Steghöhe kann dabei die Steifigkeit des Aufzugriemens 12 in Querrichtung beeinflusst werden. So gestatten relativ niedrige Stege, die beispielsweise höchstens 30% der Höhe der Keilrippen 15.1 aufweisen, eine deutlichere Deformation der Keilrippen 15.1 in ihren oberhalb der Stege 13.1 liegenden Bereichen. Erstrecken sich die Stege beispielsweise bis etwa auf die Höhe der rechteckigen Basisbereiche der Keilrippen 15.1, wo diese Basisbereiche in trapezförmige Bereiche übergehen, so können sich diese Basisbereiche kaum deformieren, was eine erhebliche Versteifung der gesamten Keilrippenanordnung bewirkt.

Die Rückenschicht 13 mit den Stegen 13.1 kann beispielsweise durch Extrusion hergestellt werden. Auch die Herstellung eines Aufzugriemens 12 nach der ersten Ausführung der vorliegenden Erfindung erfolgt vorzugsweise in einem Extrusionsverfahren. Dabei werden in einem Extrusionsapparat die Rückenschicht 13 sowie je zwei Zugträger 14.1, 14.2 pro Keilrippe 15.1 der Keilrippenanordnung 15 ab Rolle lagerichtig einer Extrusionsdüse zugeführt, in welcher die Rückenschicht und die Zugträger in das heisse und dadurch zähflüssige elastomere Material der Keilrippenanordnung eingebettet werden und der gesamte Aufzugriemen geformt wird. Die beiden jeweils einer Keilrippe zugeordneten Zugträger werden dabei auf der der Rückseite abgewandten Oberseite der Rückenschicht 13 (in Fig. 1 oben) zwischen jeweils zwei Stegen 13.1 in das elastomere Material der Keilrippenanordnung eingebettet. Dabei umschließt dieses Material die zugängliche Oberfläche der Zugträger 14.1, 14.2 und verbindet sich gleichzeitig mit der Rückenschicht 13 entlang von deren der Keilrippenanordnung zugewandten, nicht von Zugträgern bedeckten Oberfläche. Die Verbindung entsteht je nach Materialkombination mit oder ohne einen so genannten Haftvermittler, der beispielsweise vor dem Extrusionsvorgang auf die Rückenschicht aufgetragen werden kann.

Vorteilhafterweise verhindern die Stege 13.1, die im Bereich der durchgehenden Nuten 16 der Keilrippenanordnung 15 ausgebildet sind, dass ein Zugträger 14 sich während des Herstellvorganges in diese Position verschiebt, wo er nur ungenügend in die Keilrippenanordnung eingebunden würde. Insbesondere stellt jeder Steg 13.1 einen Mindestabstand einander benachbarter Zugträger 14.1, 14.2 benachbarter Keilrippen 15.1 sicher. Hierzu ist es vorteilhaft, wenn die Stege 13.1 eine Höhe aufweisen, die mindestens der halben Höhe der Zugträger 14.1, 14.2 entspricht.

Die Rückenschicht 13 bildet an ihrer der Keilrippenanordnung 15 abgewandten Rückseite (in Fig. 1 unten) eine Gleitfläche aus, die bei einer Umlenkung um ein Umlenkrad 4.2 (s. Fig. 3) mit dessen Peripherie in Kontakt steht. Diese Gleitfläche aus Polyamid weist einen geringen Reibwert und gleichzeitig eine hohe Abriebfestigkeit auf. Vorteilhaft verringern sich damit die zum seitlichen Führen des Aufzugriemens auf Umlenkrädern erforderlichen Führungskräfte zwischen seitlichen Bordscheiben der Umlenkräder und den seitlichen Borden des Aufzugsriemens. Dadurch wird die seitliche Reibungsbelastung bei der Umlenkung des Aufzugriemens und damit die erforderliche Antriebsleistung der Aufzugsanlage reduziert. Gleichzeitig verlängert sich die Lebensdauer des Aufzugriemens und des Umlenkrads.

Fig. 2 zeigt einen Aufzugriemen 12 nach einer zweiten Ausführungsform der vorliegenden Erfindung. Dabei sind Elemente, die denjenigen der ersten Ausführungsform entsprechen, mit gleichen Bezugszeichen bezeichnet, so dass nachfolgend lediglich auf die Unterschiede zwischen der ersten und zweiten Ausführung eingegangen wird.

In der zweiten Ausführungsform sind die Keilrippen 15.1 der Keilrippenanordnung 15 oberhalb der hier kürzer ausgebildeten Stege 13.1 der Rückenschicht 13 einstückig miteinander verbunden und übergreifen im Bereich 17 ihres Keilrillengrundes den jeweiligen Steg 13.1, der zwischen zwei benachbarten Zugträgern 14.1, 14.2 benachbarter Keilrippen 15.1 in die Keilrippenanordnung 15 hineinragt und von dieser auf drei Seiten umschlossen ist. Hierdurch wird eine durchgängige Kontaktseite der Keilrippenanordnung 15 ausgebildet. Zusammen mit der Verbindung des Bereichs 17 der Keilrippenanordnung 15 mit der Oberseite der Stege 13.1 ergibt dies eine festere Verbindung der Keilrippenanordnung 15 mit der Rückenschicht 13. Diese Ausführungsform ist ausserdem problemloser extrudierbar. Vorteilhafterweise entspricht bei dieser Ausführungsform die Steghöhe höchstens der halben Höhe der Zugträger 14, was den Vorteil hat, dass die in den Stegen auftretenden Biegespannungen im Vergleich mit denjenigen der ersten Ausführungsform reduziert sind.

Fig. 3 zeigt schematisch einen Schnitt durch ein in einem Aufzugsschacht 1 installiertes Aufzugssystem mit einem Aufzugriemen 12 nach einer Ausführungsform der vorliegenden Erfindung. Das Aufzugssystem umfasst einen in einem Aufzugsschacht 1 fixierten Antrieb 2 mit einem Treibrad 4.1, eine an Kabinenführungsschienen 5 geführte Aufzugskabine 3 mit unterhalb des Kabinenbodens 6 angebrachten, als Kabinentragrollen dienenden-Umlenkrollen 4.2, ein an Gegengewichtsführungsschienen 7 geführtes Gegengewicht 8 mit einer weiteren, als Gegengewichtstragrolle dienenden Umlenkrolle 4.3, sowie den Aufzugriemen 12 nach der vorstehend erläuterten ersten oder zweiten Ausführungsform der Erfindung, der die Aufzugskabine und das Gegengewicht trägt und auf diese die Antriebskraft vom Treibrad 4.1 der Antriebseinheit 2 überträgt.

Der Aufzugriemen 12 ist an einem seiner Enden unterhalb des Treibrades 4.1 an einem ersten Riemenfixpunkt 10 befestigt. Von diesem aus erstreckt er sich abwärts bis zu der als Gegengewichtstragrolle dienenden Umlenkrolle 4.3, umschlingt diese und erstreckt sich von dieser aus zum Treibrad 4.1, umschlingt dieses und verläuft entlang der gegengewichtsseitigen Kabinenwand abwärts, umschlingt auf beiden Seiten der Aufzugskabine je eine unterhalb der Aufzugskabine 3 angebrachte, als Kabinentragrolle dienende Umlenkrolle 4.2 um je 90° und verläuft entlang der dem Gegengewicht 8 abgewandten Kabinenwand aufwärts zu einem zweiten Riemenfixpunkt 11.

Die Ebene des Treibrades 4.1 kann rechtwinklig zur gegengewichtsseitigen Kabinenwand angeordnet sein und ihre Vertikalprojektion kann außerhalb der Vertikalprojektion der Aufzugskabine 3 liegen. Es ist daher zu bevorzugen, dass das Treibrad 4.1 einen geringen Durchmesser aufweist, damit der Abstand zwischen der linksseitigen Kabinenwand und der dieser gegenüber liegenden Wand des Aufzugsschachts 1 möglichst klein sein kann. Außerdem ermöglicht ein geringer Treibraddurchmesser die Verwendung eines getriebelosen Antriebsmotors mit relativ geringem Antriebsdrehmoment als Antriebseinheit 2.

Das Treibrad 4.1 und die als Gegengewichtstragrolle dienende Umlenkrolle 4.3 sind an ihrer Peripherie mit Keilrillen versehen, die im Wesentlichen komplementär zu den Keilrippen 15.1 des Aufzugriemens 12 geformt sind. Wo der Aufzugriemen 12 eines der Riemenräder 4.1 oder 4.3 umschlingt, liegen die auf seiner Kontaktseite angeordneten Keilrippen 15.1 in korrespondierenden Keilrillen des Riemenrades, wodurch eine ausgezeichnete Führung des Aufzugriemens auf diesen Riemenrädern gewährleistet ist. Außerdem wird durch eine zwischen den Keilrillen des als Treibrad dienenden Riemenrades 4.1 und den Keilrippen 15.1 des Riemens 12 entstehende Keilwirkung die Traktionsfähigkeit verbessert.

Bei dem in Fig. 3 dargestellten Aufzugssystem erfolgt die Umschlingung der als Kabinentragrollen dienenden Umlenkrollen 4.2 unterhalb der Aufzugskabine 3 so, dass die die Keilrippen aufweisende Kontaktseite des Aufzugsriemens von der Peripherie der Umlenkrollen 4.2 abgewandt ist. Der Aufzugriemen liegt dabei mit seiner Rückenschicht an den Umlenkrollen 4.2 an, wobei diese Rückenschicht, wie vorstehend beschrieben, gegenüber den Umlenkrollen 4.2 einen niedrigen Reibungskoeffizient aufweist. Um die Seitenführung des Aufzugriemens in diesem Bereich zu gewährleisten, sind am Kabinenboden 6 zwei zusätzliche, mit Keilrillen versehene Führungsrollen 4.4 angebracht, deren Keilrillen mit den Keilrippen des Aufzugsriemens 12 als Seitenführung zusammenwirken.

## Patentansprüche

1. Aufzugriemen (12) für eine Aufzuganlage, mit einer Keilrippenanordnung (15) mit wenigstens zwei sich in Längsrichtung des Aufzugriemens erstreckenden Keilrippen (15.1), die eine Kontaktseite zum Eingriff mit einem Treibrad (4.1) der Aufzuganlage bildet; einer Zugträgeranordnung (14) mit wenigstens zwei Zugträgern (14.1, 14.2), und einer Rückenschicht (13), die eine der Kontaktseite gegenüberliegende Rückseite des Aufzugriemens (12) bildet, wobei
die Rückenschicht (13) auf ihrer die Rückseite des Aufzugsriemens (12) bildenden Seite als Flachprofil ausgebildet ist,
**dadurch gekennzeichnet, dass** die Rückenschicht (13) auf ihrer gegenüberliegenden Seite wenigstens einen einstückig mit der Rückenschicht ausgebildeten, sich in Längsrichtung des Aufzugriemens erstreckenden Steg (13.1) aufweist, der zur Kontaktseite hin in einen zwei benachbarte Keilrippen verbindenen Bereich in die Keilrippenanordnung (15) hineinragt.

2. Aufzugriemen nach Anspruch 1, **dadurch gekennzeichnet, dass** die Rückenschicht (13) aus einem thermoplastischen Kunststoff, insbesondere aus Polyamid (PA), Polyethylen (PE), Polyester, insbesondere Polyethylenterephthalat (PET), Polycarbonat (PC), Polypropylen (PP), Polybutylenterephthalat (PBT), Polyethersulfon (PES), Polytetrafluorethylen (PTFE), Polyvinylchlorid (PVC) oder aus Polyblend und/oder aus einem Gewebe aus einem solchen thermoplastischem Kunststoff hergestellt ist.

3. Aufzugriemen nach einem der vorhergehenden Ansprüche, **dadurch gekennzeichnet, dass** die Keilrippen (15.1) aus einem Elastomer, insbesondere aus Polyurethan (PU), Polychloropren (CR) oder Ethylen-Propylen-Dien-Kautschuk (EPDM) hergestellt sind.

4. Aufzugriemen nach einem der vorhergehenden Ansprüche, **dadurch gekennzeichnet, dass** die Zugträger (14.1, 14.2) der Zugträgeranordnung Litzen oder Seile aus ein- oder mehrfach verdrillten Drähten und/oder Kunststoffgarnen umfassen.

5. Aufzugriemen nach einem der vorhergehenden Ansprüche, **dadurch gekennzeichnet, dass** die Keilrippen (15.1) der Keilrippenanordnung (15) auf der Kontaktseite eine Beschichtung aufweisen.

6. Aufzugriemen nach einem der vorhergehenden Ansprüche, **dadurch gekennzeichnet, dass** zwischen der Keilrippenanordnung (15) und der Rückenschicht (13) wenigstens eine Zwischenschicht angeordnet ist.

7. Aufzugriemen nach einem der vorhergehenden Ansprüche, **dadurch gekennzeichnet, dass** ein Steg (13.1) zwischen zwei einander benachbarten Keilrippen (15.1) der Keilrippenanordnung, insbesondere an oder in der Nähe der tiefsten Stelle eines die beiden Keilrippen verbindenden Keilrillengrundes angeordnet ist.

8. Aufzugriemen nach einem der vorhergehenden Ansprüche, **dadurch gekennzeichnet, dass** zwei einander benachbarte Keilrippen (15.1) der Keilrippenanordnung einstückig miteinander verbunden sind.

9. Aufzugriemen nach einem der vorhergehenden Ansprüche, **dadurch gekennzeichnet, dass** zwei einander benachbarte Keilrippen (15.1) der Keilrippenanordnung durch eine durchgehende Nut (16) voneinander getrennt sind, in die ein Steg (13.1) der Rückenschicht hineinragt.

10. Verfahren zur Herstellung eines Aufzugriemens (12) nach einem der vorhergehenden Ansprüche, **dadurch gekennzeichnet, dass**
a)eine Rückenschicht (13) aus einem ersten Elastomer gebildet wird, wobei die eine Seite der Rückenschicht als Flachprofil ausgebildet wird und die gegeüberliegende Seite mit wenigstens einem sich in Längsrichtung erstreckenden, von der Rückenschicht (13) abstehenden und mit dieser einstückig ausgebildeten Steg (13.1) ausgeformt wird;
dass b) Zugträger (14.1, 14.2) in ein zweites Elastomermaterial zumindest teilweise eingebettet werden und aus diesem zweiten Elastomermaterial wenigstens zwei Rippen (15.1) einer Keilrippenanordnung (15) für einen Riemen (12) gemäss den Ansprüchen 1 bis 9 gefertigt werden
und c) die Rückenschicht (13) und die Keilrippenanordnung (15) mittels Extrusion und/oder Kleben derart miteinander verbunden werden, dass der Steg in den Bereich zwischen den Beiden Rippen hineinragt.

11. Verfahren nach Anspruch 10, bei dem die Zugträger nach Erstellen der Rückenschicht in die Räume zwischen den Stegen auf der Rückenschicht platziert und das zweite Elastomer in Form der Keilrippenanordnung auf die Zugträger und die Rückenschicht extrudiert wird.

12. Verfahren nach Anspruch 10, bei dem die Zugträger (13) in die Keilrippenanordnung (15) eingebettet und die Keilrppenanordnung mit der Rückenschicht (13) verbunden wird.

13. Aufzugsanlage mit einer Aufzugkabine (3), einem Antrieb (2) und einer Riemenanordnung mit wenigstens einem Aufzugriemen (12) gemäss einem der Ansprüche 1 bis 9 und/oder gefertigt nach einem der Ansprüche 10 bis 13, wobei die Keilrippen des Aufzugriemens einen Flankenwinkel zwischen 60 und 120° aufweisen und mit entsprechenden Keilrillen eines Treibrades der Aufzugsanlage in Eingriff stehen.

## Claims

1. Lift belt (12) for a lift installation, with a wedge rib arrangement (15) with at least two wedge ribs (15.1) which extend in longitudinal direction of the lift belt and which form a contact side for engagement with a drive wheel (4.1) of the lift installation, a tensile carrier arrangement (14) with at least two tensile carriers (14.1, 14.2), and a back layer (13) which forms a rear side, which is opposite the contact side, of the lift belt (12), wherein the back layer (13) is constructed as a flat profile on its side forming the back side of the lift belt (12), **characterised in that** the back layer (13) has on its opposite side at least one web (13.1), which is formed integrally with the back layer and extends in the longitudinal direction of the lift belt and which protrudes towards the contact side and into a region in the wedge rib arrangement (15) connecting two adjacent wedge ribs.

2. Lift belt according to claim 1, **characterised in that** the back layer (13) is produced from a thermoplastic synthetic material, particularly from polyamide (PA), polyethylene (PE), polyester, particularly polyethyleneterephthalate (PET), polycarbonate (PC), polypropylene (PP), polybutyleneterephthalate (PBT), polyethersulfone (PES), polytetrafluorethylene (PTFE), polyvinylchloride (PVC) or from polyblend and/or a fabric of such a thermoplastic synthetic material.

3. Lift belt according to any one of the preceding claims, **characterised in that** the wedge ribs (15.1) are produced from an elastomer, particularly from polyurethane (PU), polychloroprene (CR) or ethylene-propylene-diene rubber (EPDM).

4. Lift belt according to any one of the preceding claims, **characterised in that** the tensile carriers (14.1, 14.2) of the tensile carrier arrangement comprise strands or cables of singly or multiply stranded wires and/or synthetic material threads.

5. Lift belt according to any one of the preceding claims, **characterised in that** the wedge ribs (15.1) of the web ridge arrangement (15) have a coating on the contact side.

6. Lift belt according to any one of the preceding claims, **characterised in that** at least one intermediate layer is arranged between the wedge rib arrangement (15) and the back layer (13).

7. Lift belt according to any one of the preceding claims, **characterised in that** a web (13.1) is arranged between two mutually adjacent wedge ribs (15.1) of the wedge rib arrangement, particularly at or in the vicinity of the deepest point of a wedge rib base connecting the two wedge ribs.

8. Lift belt according to any one of the preceding claims, **characterised in that** two mutually adjacent wedge ribs (15.1) of the wedge rib arrangement are integrally connected together.

9. Lift belt according to any one of the preceding claims, **characterised in that** two mutually adjacent wedge ribs (15.1) of the wedge rib arrangement are separated from one another by a continuous groove (16) into which a web (13.1) of the back layer projects.

10. Method of producing a lift belt (12) according to any one of the preceding claims, **characterised in that**
a) a back layer (13) is formed from a first elastomer, wherein one side of the back layer is formed as a flat profile and the opposite side is formed with at least one web (13.1) which extends in longitudinal direction and which protrudes from the back layer (13) and is formed integrally therewith;
b) tensile carriers (14.1, 14.2) are at least partly embedded in a second elastomer material and at least two ribs (15.1) of a wedge rib arrangement (15) for a belt (12) according to claims 1 to 9 are produced from this second elastomer material and
c) the back layer (13) and the wedge rib arrangement (15) are connected together by means of extruding and/or gluing in such a manner that the web protrudes into the region between the two ribs.

11. Method according to claim 10, in which the tensile carriers are after production of the back layer positioned in the spaces between the webs on the back layer and the second elastomer is extruded in the form of a wedge rib arrangement on the tensile carriers and the back layer.

12. Method according to claim 10, in which the tensile carriers (13) are embedded in the wedge rib arrangement (15) and the wedge rib arrangement is connected with the back layer (13).

13. Lift installation with a lift cage (3), a drive (2) and a belt arrangement with at least one lift belt (12) according to any one of claims 1 to 9 and/or produced in accordance with any one of claims 10 to 12, wherein the wedge ribs of the lift belt have a flank angle between 60 and 120° and are disposed in engagement with corresponding wedge grooves of a drive wheel.

## Revendications

1. Courroie d'ascenseur (12) pour une installation d'ascenseur, avec un dispositif à nervures cunéiformes (15) qui comprend au moins deux nervures cunéiformes (15.1) s'étendant dans le sens longitudinal de la courroie d'ascenseur et qui forme une face de contact destinée à venir en prise avec une poulie motrice (4.1) de l'installation d'ascenseur ; un dispositif à supports de traction (14) qui comprend au moins deux supports de traction (14.1, 14.2), et une couche arrière (13) qui forme une face arrière, opposée à la face de contact, de la courroie d'ascenseur (12), étant précisé que
la couche arrière (13), sur sa face formant la face arrière de la courroie d'ascenseur (12), est conçue comme un profilé plat,
**caractérisée en ce que** la couche arrière (13) présente sur sa face opposée au moins une bande (13.1) qui est réalisée d'une seule pièce avec ladite couche arrière, qui s'étend dans le sens longitudinal de la courroie d'ascenseur, et qui dépasse dans le dispositif à nervures cunéiformes (15), en direction de la face de contact, dans une zone reliant deux nervure cunéiformes voisines.

2. Courroie d'ascenseur selon la revendication 1, **caractérisée en ce que** la couche arrière (13) est fabriquée à partir d'une matière thermoplastique, en particulier de polyamide (PA), de polyéthylène (PE), de polyester, en particulier de polyéthylène téréphtalate (PET), de polycarbonate (PC), de polypropylène (PP), de polybutylène téréphtalate (PBT), de polyéther sulfone (PES), de polytétrafluoréthylène (PTFE), de poly(chlorure de vinyle) (PVC) ou d'un mélange polymère et/ou d'un tissu composé d'une matière thermoplastique de ce type.

3. Courroie d'ascenseur selon l'une des revendications précédentes, **caractérisée en ce que** les nervures cunéiformes (15.1) sont fabriquées à partir d'un élastomère, en particulier de polyuréthanne (PU), de polychloroprène (CR) ou de caoutchouc éthylène propylène diène (EPDM).

4. Courroie d'ascenseur selon l'une des revendications précédentes, **caractérisée en ce que** les supports de traction (14.1, 14.2) du dispositif à supports de traction comprennent des torons ou des câbles composés de fils métalliques et/ou de fils en matière plastique à torsion simple ou multiple.

5. Courroie d'ascenseur selon l'une des revendications précédentes, **caractérisée en ce que** les nervures cunéiformes (15.1) du dispositif à nervures cunéiformes (15) présentent un revêtement sur leur face de contact.

6. Courroie d'ascenseur selon l'une des revendications précédentes, **caractérisée en ce qu'**au moins une couche intermédiaire est disposée entre le dispositif à nervures cunéiformes (15) et la couche arrière (13).

7. Courroie d'ascenseur selon l'une des revendications précédentes, **caractérisée en ce qu'**une bande (13.1) est disposée entre deux nervures cunéiformes (15.1) du dispositif à nervures cunéiformes qui sont voisines, en particulier à l'endroit le plus profond ou près de l'endroit le plus profond d'un fond de rainure cunéiforme qui relie les deux nervures cunéiformes.

8. Courroie d'ascenseur selon l'une des revendications précédentes, **caractérisée en ce que** deux nervures cunéiformes (15.1) du dispositif à nervures cunéiformes (15) qui sont voisines l'une de l'autre sont reliées d'une seule pièce entre elles.

9. Courroie d'ascenseur selon l'une des revendications précédentes, **caractérisée en ce que** deux nervures cunéiformes (15.1) du dispositif à nervures cunéiformes qui sont voisines l'une de l'autre sont séparées par une rainure continue (16) dans laquelle dépasse une patte (13.1) de la couche arrière (13).

10. Procédé pour fabriquer une courroie d'ascenseur (12) selon l'une des revendications précédentes, **caractérisé**
a) **en ce qu'**on forme une couche arrière (13) à partir d'un premier élastomère, une face de ladite couche (13) étant conçue comme un profilé plat tandis que la face opposée est pourvue d'au moins une patte (13.1) qui s'étend dans le sens longitudinal, qui dépasse de la couche arrière (13) et qui est formée d'une seule pièce avec celle-ci ;
b) **en ce qu'**on enrobe au moins partiellement des supports de traction (14.1, 14.2) dans une seconde matière élastomère, et on fabrique à partir de cette seconde matière élastomère au moins deux nervures (15.1) d'un dispositif à nervures cunéiformes (15) pour une courroie (12) selon les revendications 1 à 9, et
c) on relie la couche arrière (13) et le dispositif à nervures cunéiformes (15) par extrusion et/ou collage de telle sorte que la bande dépasse dans la zone entre les deux nervures.

11. Procédé selon la revendication 10, selon lequel après avoir réalisé la couche arrière, on place les supports de traction dans les espaces entre les pattes prévues sur la couche arrière, et on extrude le second élastomère sous la forme du dispositif à nervures cunéiformes sur les supports de traction et sur la couche arrière.

12. Procédé selon la revendication 10, selon lequel on enrobe les supports de traction (13) dans le dispositif à nervures cunéiformes (15), et on relie le dispositif à nervures cunéiformes à la couche arrière (13).

13. Installation d'ascenseur avec une cabine d'ascenseur (3), un entraînement (2) et un dispositif à courroie comprenant au moins une courroie d'ascenseur (12) selon l'une des revendications 1 à 9 et/ou fabriquée selon l'une des revendications 10 à 12, les nervures cunéiformes de la courroie d'ascenseur présentant un angle de flancs situé entre 60 et 120°, et étant en prise avec des rainures cunéiformes correspondantes d'une poulie motrice de l'installation d'ascenseur.
